# FASCICULE DE BREVET EUROPEEN

(11) **EP 0 706 491 B1**
(45) Date de publication et mention de la délivrance du brevet: **10.12.1997**
(21) Numéro de dépôt: 95915731.4
(22) Date de dépôt: 02.05.1995
(51) Int. Cl.: B65G 47/51, B65G 1/04, B65G 1/127

(54) **INSTALLATION DE STOCKAGE PENDULAIRE**
VORRICHTUNG ZUR PENDELNDEN SPEICHERUNG
SUSPENDED STORAGE APPARATUS

(30) Priorité: 03.05.1994 FR 9405711
(43) Date de publication de la demande: 17.04.1996
(73) Titulaire: SAPAL, Société Anonyme des Plieuses Automatiques, 1400 Ecublens (CH)
(72) Inventeur: WALSER, Hans, Heiri, CH-7214 Grüsch (CH)
(74) Mandataire: Nithardt, Roland
(86) Numéro de dépôt international: CH9500095
(87) Numéro de publication internationale: WO9529861

(56) Documents cités:
- BE-A- 626 027
- DE-A- 3 148 473

## Description

La présente invention concerne une installation de stockage pendulaire de produits, notamment de produits alimentaires et plus particulièrement de plaques de chocolat ou similaires ces produits étant déposés sur des tablettes disposées horizontalement sur des gondoles pendues horizontalement à deux chaînes montées sur un bâti et cheminant parallèlement entre elles sur un circuit fermé comprenant une section d'alimentation allant d'une station de dépôt des produits sur les tablettes, à une station réceptrice de ces produits agencée pour décharger les tablettes, et une section de retour dans laquelle les tablettes sont ramenées vides de la station réceptrice à la station de dépôt, dans laquelle le bâti se compose d'au moins un module de base composé de quatre colonnes verticales qui sont reliées entre elles deux à deux par des éléments de couplage longitudinaux respectivement inférieurs et supérieurs et par des éléments de couplage transversaux respectivement inférieurs et supérieurs.

On connaît déjà de nombreuses installations de stockage pendulaires, notamment celle décrite dans la demande de brevet européen publiée sous le numéro 0 538 742 A1. Dans les lignes de production de produits alimentaires, par exemple les plaques de chocolat, les biscuits, les produits enrobés de chocolat et autres produits fragiles et délicats à manipuler, il est souvent nécessaire de pouvoir disposer d'une installation de stockage momentané de ces produits étant donné que la production est effectuée en continu alors que le conditionnement se fait en discontinu et que les unités de conditionnement d'une même ligne sont soumises périodiquement à des temps d'arrêt requis pour l'entretien, la réparation ou la mise en place du matériau d'emballage.

Ces installations de stockage doivent répondre à un cahier des charges relativement lourd. Elles doivent permettre un stockage de grande capacité et assurer un transport efficace et soigné des produits d'une station de dépôt vers une station réceptrice, en offrant un maximum de sécurité aux produits véhiculés, une grande souplesse d'utilisation et un potentiel de stockage variable en fonction de la demande instantanée.

L'un des problèmes que posent ces installations est celui de l'encombrement. Il est aisé de comprendre que l'utilisateur souhaite disposer d'une capacité de stockage la plus grande possible pour un encombrement minimal. En outre, dans la plupart des cas, une telle installation doit pouvoir être montée dans des locaux existants, ce qui impose une géométrie "sur mesure". En effet, sauf dans le cas d'une construction neuve, il est souvent difficile, et rarement souhaitable, d'adapter une construction existante aux exigences d'encombrement imposées par la mise en place d'une installation de stockage sur une ligne de conditionnement de produits. De ce fait, le fabricant de ce type d'installations doit habituellement adapter la conception de son installation de stockage à un ensemble de paramètres qui sont liés d'une part aux produits, et d'autre part à l'espace disponible. Il en résulte un compromis qui n'offre pas toujours la solution idéale aux problèmes du stockage. Or, la plupart des installations existantes sont des réalisations standards comportant un bâti fixe sur lequel sont montées les deux chaînes qui portent les gondoles destinées à recevoir les produits. Cette construction rigide dans sa conception ne permet pas d'optimiser le problème du stockage pour tenir compte des paramètres liés aux produits sans devenir tributaire des paramètres liés à l'espace disponible.

La présente invention se propose de résoudre le problème mentionné ci-dessus en remédiant aux inconvénients des systèmes antérieurs connus, et offrant une grande souplesse d'utilisation ainsi qu'une faculté d'adaptation en fonction de diverses applications, afin de conférer à cette installation un caractère sensiblement universel.

Ces buts sont atteints par l'installation de stockage selon l'invention caractérisée en ce que lesdites colonnes verticales comportent à chacune de leurs extrémités quatre éléments de liaison respectivement inférieurs et supérieurs, et en ce que ces éléments de liaison sont pourvus de moyens d'accouplement agencés pour assurer le montage de modules adjacents et/ou superposés.

Dans un mode de réalisation préféré, les éléments de liaison inférieurs sont agencés pour porter une roue dentée inférieure A et les éléments de liaison supérieures sont agencés pour porter une roue dentée supérieure B de guidage des chaînes, les éléments de couplage longitudinal inférieurs étant agencés pour porter au moins une roue dentée complémentaire A et les éléments de couplage longitudinal supérieurs étant agencés pour porter au moins une roue dentée complémentaire B de guidage des chaînes.

De façon avantageuse, la distance entre deux roues dentées inférieures voisines et la distance entre deux roues dentées supérieures voisines a une valeur constante d et les éléments de couplage longitudinaux inférieurs et supérieurs ont une longueur sensiblement égale à un multiple de cette distance d qui sépare deux roues dentées voisines.

Dans une variante de réalisation l'installation peut comporter plusieurs modules juxtaposés et/ou superposés, ces modules étant liés deux à deux par des éléments de liaison communs, les éléments de couplage longitudinaux ayant des longueurs comprises entre d et nd, où n est un nombre entier supérieur à 1.

De préférence les éléments de liaison sont constitués par des plots fixés aux extrémités des colonnes verticales, ces plots ayant une forme parallélépipédique de section transversale carrée ou rectangulaire et présentant quatre faces planes agencées pour fixer les éléments de couplage longitudinaux inférieurs et supérieurs et les éléments de couplage transversaux inférieurs et supérieurs.

De façon avantageuse, les éléments de couplage longitudinaux comportent une traverse supportant les roues dentées et deux barres de raidissement disposées respectivement de part et d'autre de ladite traverse.

Dans la forme de réalisation préférée les éléments de liaison sont agencés pour porter chacun une roue dentée.

De façon avantageuse, l'installation comporte au moins un échangeur automatique de tablettes et cet échangeur comporte un dispositif d'introduction de tablettes propres et un dispositif de prélèvement de tablettes sales, ces deux dispositifs étant groupés en aval de la station d'évacuation des produits.

Le dispositif d'introduction de tablettes propres peut être installé en aval d'une station séparée de dépôt des produits, et le dispositif de prélèvement des tablettes sales peut être installé en aval de la station d'évacuation des produits.

De préférence, le dispositif d'introduction de tablettes propres comporte un poussoir agencé pour pousser une tablette disposée au-dessus d'une pile de tablettes propres d'un magasin, dans un espace vide d'une gondole, et le dispositif de prélèvement des tablettes comporte une griffe agencée pour tirer une tablette sale hors d'une gondole et pour l'amener au sommet d'une pile de tablettes sales d'un magasin.

Lesdits magasins comportent une courroie crantée entraînée par un moteur d'entraînement et une console portant respectivement les piles de tablettes propres et sales.

Dans une variante de réalisation l'échangeur automatique de tablettes comporte un dispositif d'amenée de tablettes vides à charger localisé dans la station de dépôt et un dispositif de reprise des tablettes vides déchargées, et le dispositif d'amenée des tablettes vides à charger est associé à un dispositif de chargement de lits de produits, le dispositif de reprise des tablettes vides déchargées étant associé à un dispositif de déchargement de lits de produits identique au dispositif de chargement.

La présente invention sera mieux comprise en référence à la description d'une forme de réalisation préférée et de variantes et au dessin annexé donné à titre d'exemple non limitatif, dans lequel :
la figure 1 représente une vue en perspective illustrant une forme de réalisation préférée de l'installation de stockage pendulaire selon l'invention,
la figure 2 représente une vue simplifiée en perspective illustrant le concept de base d'un des modules composant l'installation représentée par la figure 1,
les figures 3, 4 et 5 représentent trois combinaisons distinctes de modules pour réaliser une installation selon l'invention,
la figure 6 représente une vue latérale en élévation de l'installation de la figure 5,
la figure 7 représente une vue schématique de côté en élévation d'un échangeur automatique de tablettes,
la figure 8 représente une vue du mécanisme d'entraînement de l'échangeur automatique de la figure 7, et
la figure 9 représente une vue schématique d'une variante de réalisation dans laquelle on charge des lits de produits sur les tablettes.

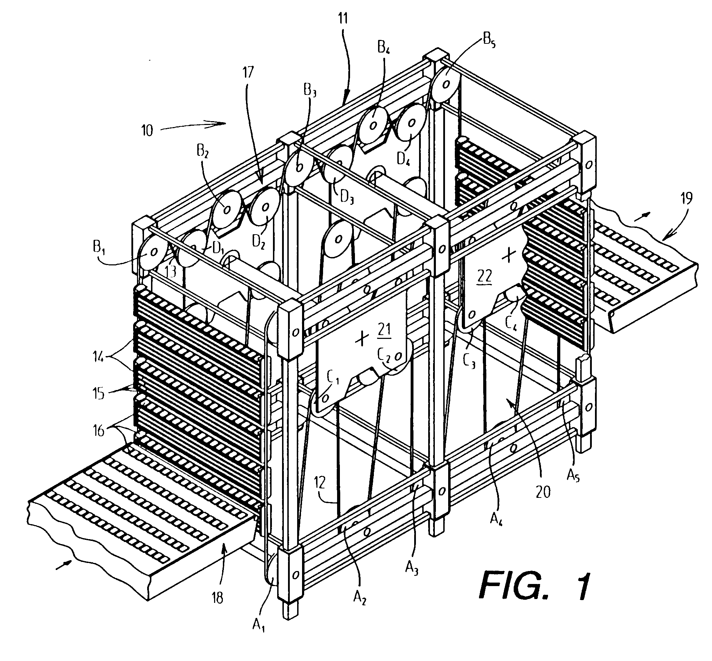

En référence à la figure 1, l'installation de stockage pendulaire 10, représentée en perspective, se compose principalement d'un bâti 11 qui, dans ce cas, a la forme d'un parallélépipède rectangle qui définit un espace de stockage à l'intérieur duquel sont montées deux chaînes de transport sans fin 12 et 13 entre lesquelles sont suspendues des gondoles 14 portant des tablettes 15 sur lesquelles sont déposés les produits 16. Les gondoles 14 sont suspendues horizontalement par deux pivots latéraux aux chaînes 12 et 13 qui se déplacent parallèlement entre elles selon un trajet à boucles multiples comportant une première section dite section d'alimentation 17 allant d'une station de dépôt 18 des produits sur les tablettes à une station réceptrice 19, agencée pour décharger lesdits tablettes et une seconde section 20 dite section de retour dans laquelle les tablettes préalablement déchargés retournent de la station réceptrice à la station de dépôt. Dans l'exemple représenté l'installation comporte cinq paires de roues dentées inférieures respectivement A1, A2, A3, A4, A5 et cinq paires de roues dentées supérieures respectivement B1, B2, B3, B4, B5 qui sont montées sur des axes fixes portés par le bâti. Par ailleurs, l'installation comporte, dans l'exemple représenté, deux chariots mobiles en hauteur respectivement 21 et 22 qui portent chacun deux paires de roues dentées inférieures C1, C2 (pour le chariot 21) et C3, C4 (pour le chariot 22) et deux paires de roues supérieures D1, D2 (pour le chariot 21) et D3, D4 (pour le chariot 22). La section d'alimentation du circuit fermé défini par les deux chaînes 12 et 13 se compose des segments de chaîne passant de la station de dépôt à la verticale des roues B1, puis par-dessus ces roues, en dessous des roues supérieures D1 du chariot 21, au-dessus des roues B2, en dessous des roues supérieures D2 du chariot 21, puis au-dessus des roues B3, en dessous des roues supérieures D3 du chariot 22, au-dessus des roues B4, en dessous des roues supérieures D4 du chariot 22, et au-dessus des roues B5 pour redescendre à la verticale jusqu'à la station réceptrice. La section de retour est définie par les tronçons de chaînes allant de la station de retour en dessous des roues A5 puis au-dessus des roues inférieures C4 du chariot 22, en dessous des roues A4, au-dessus des roues inférieures C3 du chariot 22, en dessous des roues A3, au-dessus des roues inférieures C2 du chariot 21, en dessous des roues A2, au-dessus des roues inférieures C1 du chariot 21, et enfin en dessous des roues A1 pour revenir à la verticale de la station de dépôt. Grâce aux chariots mobiles l'installation de stockage a une capacité d'accumulation ou de stockage variable. Lorsque les chariots sont en position haute, la section d'alimentation est minimale c'est-à-dire que les produits sont acheminés le plus rapidement possible de la station de dépôt à la station réceptrice. En revanche, lorsque les chariots descendent vers une position basse, la longueur de la section d'alimentation augmente de même que la capacité de stockage de l'installation.

Dans la réalisation selon l'invention, le bâti 11 est conçu selon un principe modulaire, c'est-à-dire qu'il est constitué d'un ou de plusieurs modules rendus solidaires les uns des autres, dans le but de permettre une géométrie qui est parfaitement adaptée aux besoins de l'utilisateur et qui satisfait aux exigences imposées par le cahier des charges de l'application visée.

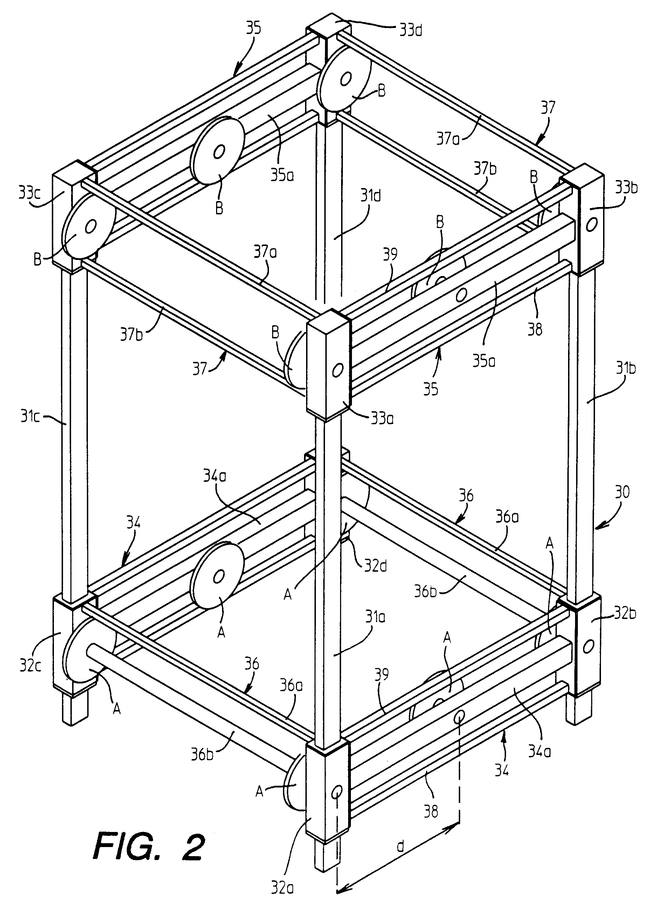

La figure 2 représente une vue dépouillée en perspective, qui illustre la conception d'un module de base. Ce module de base 30 se compose essentiellement de quatre colonnes verticales 31a, 31b, 31c et 31d, qui sont associées à chacune de leurs extrémités respectives à des éléments de liaison respectivement inférieurs 32a, 32b, 32c, 32d et supérieurs 33a, 33b, 33c et 33d. Ces éléments de liaison sont constitués par des plots soudés emboîtés ou fixés par des moyens classiques (boulons, vis) aux extrémités des colonnes verticales, ces plots ayant une forme parallélépipédique de section transversale carrée ou rectangulaire de manière à présenter quatre faces planes qui permettent de fixer des éléments de couplage longitudinaux respectivement inférieurs 34 et supérieurs 35 et des éléments de couplage transversaux respectivement inférieurs 36 et supérieurs 37 qui assurent la liaison entre les colonnes du module. Les éléments de couplage longitudinaux inférieurs 34 et supérieurs 35 comportent chacun une traverse 34a, respectivement 35a, supportant respectivement une des roues dentées inférieures A et une des roues dentées supérieures B. Deux paires complémentaires de roues dentées inférieures A sont portées par des éléments de liaison inférieurs 32a, 32b, 32c et 32d. De façon similaire, deux paires de roues dentées supérieures B sont portées par les éléments de liaison supérieurs 33a, 33b, 33c et 33d. Les éléments de couplage longitudinaux 34 et 35 comportent par ailleurs deux barres de raidissement 38, 39 disposées respectivement de part et d'autre des traverses 34a et 35a. Ces barres de raidissement engendrent des précontraintes qui assurent la rigidité longitudinale du module de base 30. Des croisillons peuvent, le cas échéant, être utilisés pour relier en diagonale des éléments de liaison disposés d'un même côté de l'installation afin de renforcer la stabilité de l'ensemble.

Afin de composer l'installation la mieux adaptée à l'application envisagée, il est possible de combiner plusieurs modules en les disposant dans le prolongement les uns des autres et/ou en les superposant. A cet effet, les éléments de liaison 32a, 32b, 32c, 32d et 33a, 33b, 33c, 33d sont pourvus de moyens d'accouplement appropriés.

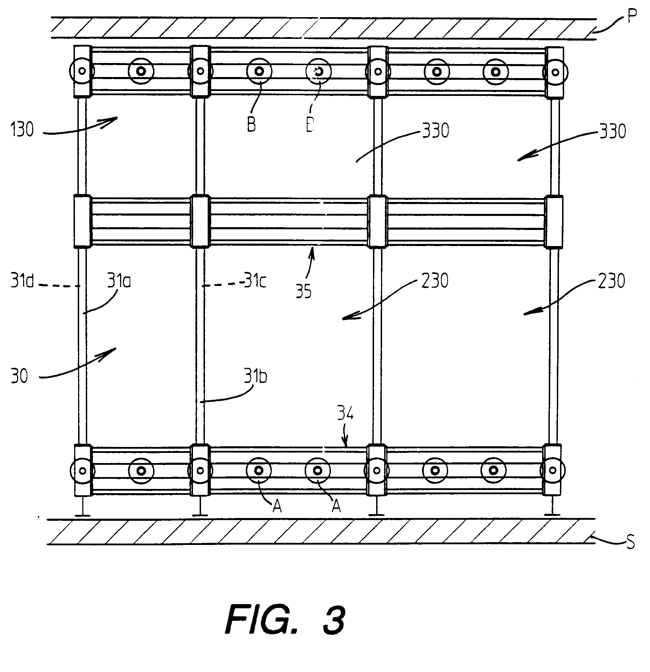

Les figures 3, 4 et 5 illustrent schématiquement trois variantes de combinaisons de modules réalisées à partir d'un module de base et/ou d'une extension de ce module de base. Dans la forme de réalisation représentée par la figure 3, on utilise un module de base 30 sensiblement identique à celui représenté par la figure 2. Sur ce module de base 30 on superpose un module 130 qui dérive du module de base 30 par une simple diminution de la hauteur des colonnes 31a, 31b, 31c et 31d. Dans le prolongement du module de base 30 sont juxtaposés deux modules 230 identiques qui dérivent du module de base 30 du fait que les éléments de couplage longitudinaux 34 et 35 ont été agrandis par rapport à ceux du module de base, ce qui permet la mise en place de deux roues intermédiaires respectivement A et B et accroît d'une manière conséquente la capacité de stockage de l'installation. Enfin, deux modules identiques 330 ont été superposés aux modules 230. Ils diffèrent des modules 230 par le fait que la hauteur des colonnes a été diminuée pour être égale à celle des colonnes du module 130.

Grâce au concept modulaire et au concept d'assemblage se basant sur les éléments de liaison reliés entre eux par des colonnes de longueur variable et des éléments de couplage de longueur variable, il est particulièrement aisé, comme le montre la figure d'utiliser un volume optimal, par exemple délimité par le sol S et le plafond P d'un local existant pour stocker momentanément des produits. Dans une telle réalisation, certaines des roues dentées sont éliminées, par exemple les roues supérieures d'un premier module et les roues inférieures d'un deuxième module lorsque le deuxième module est superposé au premier.

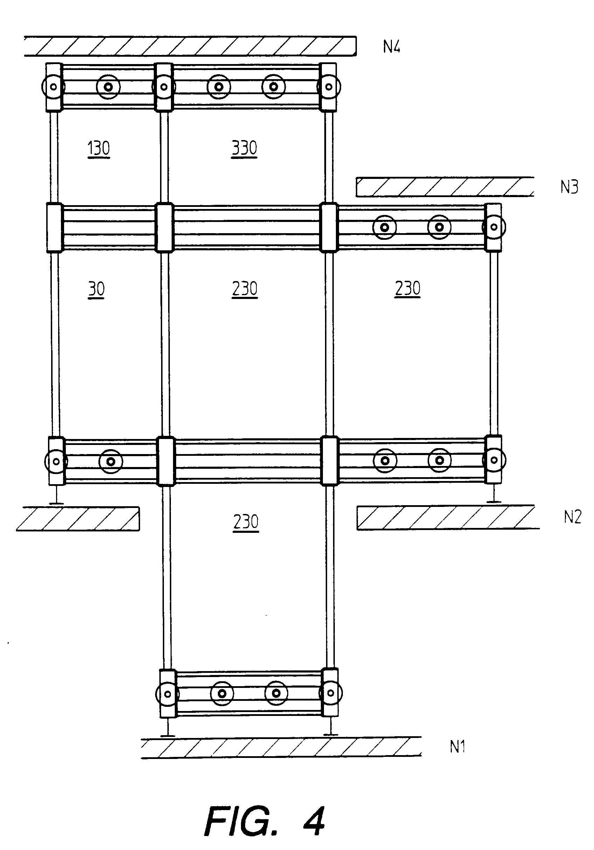

La figure 4 illustre une autre forme de réalisation qui exploite de manière optimale un espace délimité par quatre niveaux N1, N2, N3 et N4. On peut affirmer d'emblée que les dispositifs de stockage de type connu ne pourraient pas être utilisés dans un local ayant une géométrie aussi complexe et que cette utilisation obligerait l'utilisateur à entreprendre des transformations de maçonnerie coûteuses et nécessitant l'immobilisation de la ligne. Cette réalisation se compose d'un module de base 30 complété par trois modules 230, tels que définis en référence à la figure 3, juxtaposés et superposés et par un module 130 superposé au module de base 30 ainsi qu'un module 330 superposé à deux modules 230.

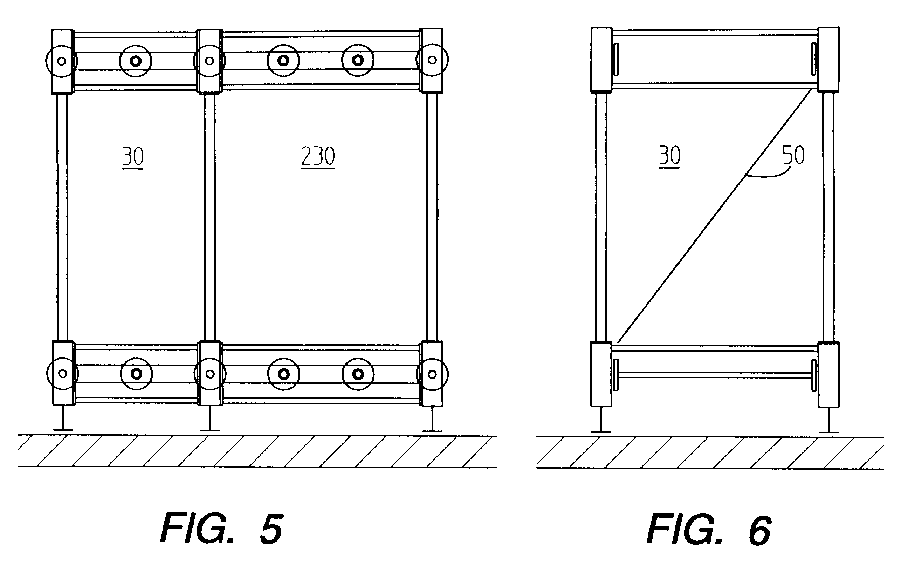

La figure 5 illustre une forme de réalisation relativement simple qui se compose d'un module de base 30 juxtaposé à un module 230.

La figure 6 représente une vue latérale de l'installation de la figure 5. On notera en particulier l'existence d'un croisillon 50 qui contribue à stabiliser cette installation.

Cette conception modulaire permet une adaptation à tous les sites et à toutes les applications et autorise en outre une évolution de l'installation, notamment un agrandissement du volume de stockage en fonction d'un accroissement des besoins.

On notera toutefois que la distance entre deux roues dentées A et entre deux roues dentées B est constante. Elle est liée à l'écartement minimal entre les gondoles de deux colonnes adjacentes, cet écartement minimal étant déterminé de telle manière que ces gondoles n'entrent pas en collision entre elles au cours de leurs déplacements. Il résulte du fait que les roues dentées A sont équidistantes, que la longueur des éléments de couplage longitudinaux inférieurs 34 est standard pour un type de module. Par exemple, pour le module de base 30, cette longueur est approximativement égale à deux fois la distance entre deux roues dentées A soit 2d si d est la distance entre deux roues dentées A. Dans le cas des modules 230 et 330, cette longueur est égale à 3d.

Le même raisonnement est valable pour les roues dentées B et les éléments de couplage longitudinaux supérieurs 35 dont la longueur est un multiple entier de la distance d qui sépare les axes de deux roues dentées A ou B.

D'une manière générale, la longueur des éléments de couplage longitudinaux est comprise entre d et nd, où n est un nombre entier supérieur à 1.

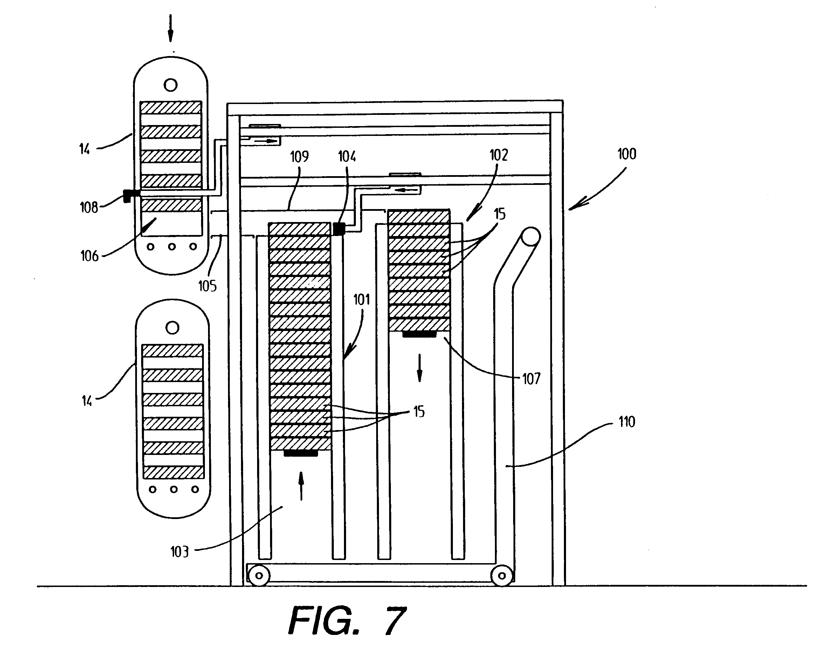

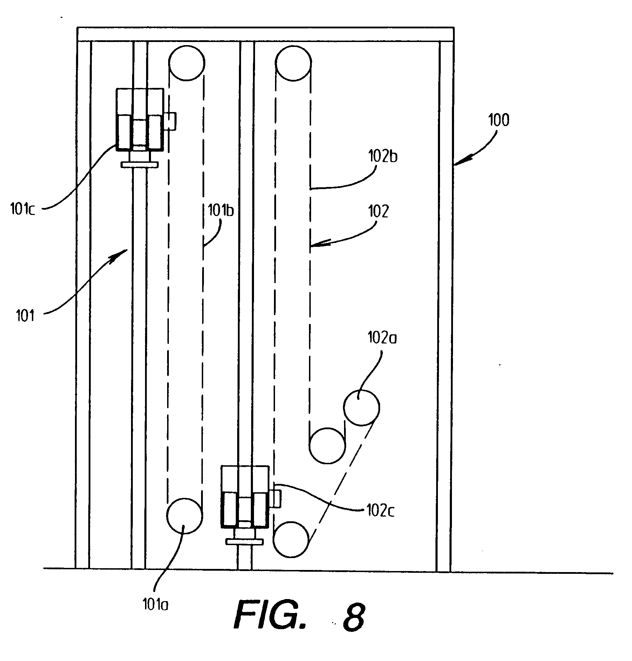

Lorsque les gondoles 14 portent des tablettes 15 destinées à recevoir des produits tels que les plaques de chocolat qui déposent des particules ou des miettes qui les encrassent, il est nécessaire de procéder à un nettoyage régulier des tablettes. Dans les installations connues, ce nettoyage s'effectue manuellement. La forme parfaitement symétrique des tablettes leur géométrie et leur mode de mise en place et de maintien en position sur les gondoles permettent d'équiper l'installation d'un changeur automatique de tablettes. Une forme de réalisation avantageuse d'un tel changeur est représentée schématiquement à titre d'exemple par les figures 7 et 8. Dans cette réalisation l'échangeur 100 regroupe un dispositif 101 d'introduction de tablettes propres et un dispositif 102 de prélèvement des tablettes sales. Les séquences de fonctionnement ou le mode opératoire de ces dispositifs peut être très varié selon les besoins. L'échange des tablettes s'effectue bien entendu lorsque les produits ont préalablement été évacués. Cet échange peut, par exemple, concerner une gondole sur dix à chaque cycle complet de l'installation, de sorte qu'au bout de dix cycles toutes les gondoles ont subi un nettoyage.

Le dispositif 101 d'introduction des tablettes propres comporte un magasin 103 dans lequel est empilée une série de tablettes propres 15 et un poussoir 104 agencé pour pousser la tablette 15 supérieure de la pile, pour la faire glisser sur une table 105 et pour la mettre en place dans l'espace vide en regard 106 de la gondole 14. Cet espace vide a été créé par le dispositif de prélèvement 102 qui a précédemment retiré une tablette sale à l'emplacement correspondant.

Ce dispositif de prélèvement 102 comporte un magasin 107 dans lequel est empilée une série de tablettes 15 à nettoyer, et une griffe 108 agencée pour retirer une tablette de la gondole, la faire glisser sur une table 109 et pour l'amener au-dessus de la pile de tablettes du magasin 107. A chaque dépôt d'une tablette 15, le magasin 107 descend d'une hauteur correspondant à l'épaisseur des embouts d'une tablette. En revanche, à chaque évacuation d'une tablette 15 du magasin 103, la pile remonte d'une hauteur correspondant à cette même épaisseur.

Dans l'exemple représenté, les deux magasins 103 et 107 sont montés sur un chariot 110 qui peut être évacué manuellement ou d'une manière automatique.

La figure 8 montre le mécanisme d'entraînement de l'échangeur automatique 100. Le dispositif 101 et le dispositif 102 comportent chacun un moteur d'entraînement, respectivement 101a et 102a, agencé pour entraîner chacun une courroie crantée, respectivement 101b et 102b. Ces courroies portent chacune une console, respectivement 101c et 102c qui sert de support respectivement à la pile de tablettes propres et à la pile de tablettes sales. Les moteurs sont commandés pour avancer pas à pas. L'une des consoles monte lorsque l'autre descend. La pile de talettes propres est en principe pleine lorsque la pile de tablettes sales est vide et réciproquement.

Selon une variante, les deux dispositifs d'introduction et de prélèvement peuvent être séparés. Une telle solution est par exemple envisageable si on veut déposer sur les tablettes des rangées ou des lits de produits avant de mettre en place ces tablettes dans les gondoles. Dans ce cas, on installe le dispositif de prélèvement des tablettes sales après la station d'évacuation des produits et on installe le dispositif d'introduction des tablettes propres en aval du dispositif séparé de dépôt des produits. Une telle réalisation autorise le stockage de produits en lits ce qui n'a jamais pu être réalisé avec les installations connues

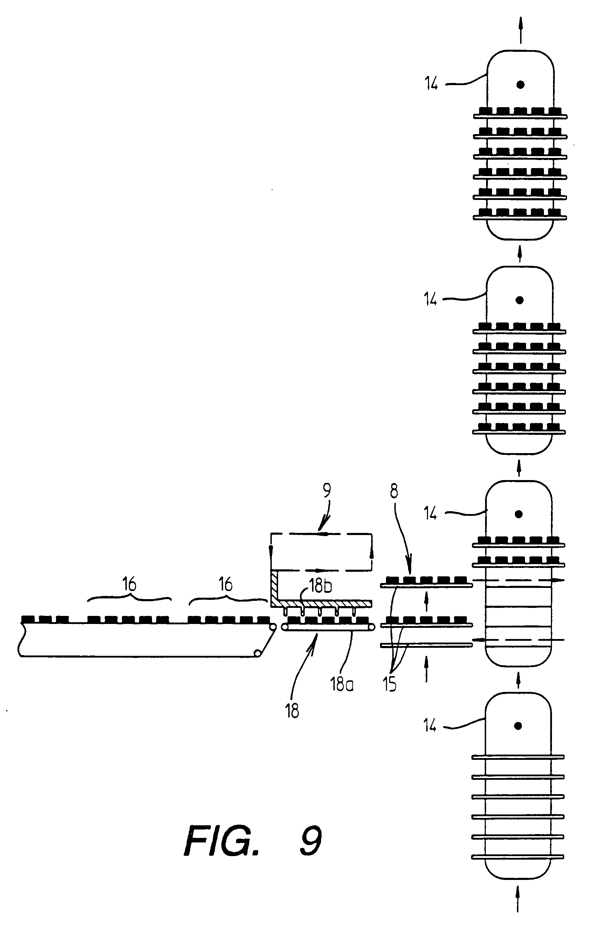

Une telle réalisation est représentée par la figure 9. La station de dépôt 18 est agencée pour procéder au dépôt de lits de produits 16. Cette station est pourvue d'un dispositif d'amenée 8 de tablettes vides et d'un dispositif de chargement 9 des lits de produits. Elle comporte en outre un ruban 18a et un guide 18b ayant une structure en forme de peigne pour pouvoir retenir individuellement les produits de telle manière qu'ils gardent leur disposition en lits pendant leur transfert sur les tablettes 15. Ces tablettes sont amenées par un dispositif tel que précédemment et sont mis en place sur les gondoles après avoir été chargées de produits disposés en lits. La reprise des produits se fait de manière similaire dans la station réceptrice avec un dispositif de déchargement des tablettes et un dispositif de reprise des tablettes vides.

## Revendications

1. Installation de stockage pendulaire (10) de produits, notamment de produits alimentaires et plus particulièrement de plaques de chocolat ou similaires, ces produits étant déposés sur des tablettes (15) disposées horizontalement sur des gondoles (14) pendues horizontalement à deux chaînes (12, 13) cheminant parallèlement entre elles sur un circuit fermé comprenant une section d'alimentation (17) allant d'une station de dépôt (18) des produits sur les tablettes, à une station réceptrice (19) de ces produits agencée pour décharger les tablettes, et une section de retour (20) dans laquelle les tablettes sont ramenées vides de la station réceptrice à la station de dépôt, dans laquelle le bâti (11) se compose d'au moins un module de base (30) composé de quatre colonnes verticales (31a, 31b, 31c, 31d) qui sont reliées entre elles deux à deux par des éléments de couplage longitudinaux respectivement inférieurs (34) et supérieurs (35) et par des éléments de couplage transversaux respectivement inférieurs (36) et supérieurs (37), les colonnes verticales comportant à chacune de leurs extrémités quatre éléments de liaison respectivement inférieurs (32a, 32b, 32c, 32d) et supérieurs (33a, 33b, 33c, 33d), lesdits éléments de liaison étant pourvus de moyens d' accouplement agencés pour assurer le montage de modules adjacents et/ou superposés.

2. Installation selon la revendication 1, caractérisée en ce que les éléments de liaison inférieurs (32a, 32b, 32c, 32d) sont agencés pour porter une roue dentée inférieure (A) et les éléments de liaison supérieurs (33a, 33b, 33c, 33d) sont agencés pour porter une roue dentée supérieure (B) de guidage des chaînes.

3. Installation selon la revendication 1, caractérisée en ce que les éléments de couplage longitudinal inférieurs (34) sont agencés pour porter au moins une roue dentée complémentaire (A) et les éléments de couplage longitudinal supérieurs (35) sont agencés pour porter au moins une roue dentée complémentaire (B) de guidage des chaînes.

4. Installation selon la revendication 2, caractérisée en ce que la distance entre deux roues dentées inférieures voisines (A) et la distance entre deux roues dentées supérieures voisines (B) a une valeur constante d.

5. Installation selon la revendication 3, caractérisée en ce que les éléments de couplage longitudinaux inférieurs (34) et supérieurs (35) ont une longueur sensiblement égale à un multiple de la distance d qui sépare deux roues dentées voisines (respectivement A ou B).

6. Installation selon l'une des revendications précédentes caractérisée en ce qu'elle comporte plusieurs modules juxtaposés et/ou superposés, ces modules étant liés deux à deux par des éléments de liaison communs, et en ce que les éléments de couplage longitudinaux (34, 35) ont des longueurs comprises entre d et nd, où n est un nombre entier supérieur à 1.

7. Installation selon la revendication 1, caractérisée en ce que les éléments de liaison (32a, 32b, 32c, 32d; 33a, 33b, 33c, 33d) sont constitués par des plots fixés aux extrémités des colonnes verticales (31a, 31b, 31c, 31d), ces plots ayant une forme parallélépipédique de section transversale carrée ou rectangulaire et présentant quatre faces planes agencées pour fixer les éléments de couplage longitudinaux inférieurs (34) et supérieurs (35) et les éléments de couplage transversaux inférieurs (36) et supérieurs (37).

8. Installation selon la revendication 7, caractérisée en ce que les éléments de couplage longitudinaux comportent une traverse (34a, 35a) supportant les roues dentées (A, B) et deux barres de raidissement (38, 39) disposées respectivement de part et d'autre de ladite traverse.

9. Installation selon la revendication 7, caractérisée en ce que les éléments de liaison (32a, 32b, 32c, 32d; 33a, 33b, 33c, 33d) sont agencés pour porter chacun une roue dentée (A, B).

10. Installation selon la revendication 1, caractérisée en ce qu'elle comporte au moins un échangeur automatique de tablettes (100).

11. Installation selon la revendication 10, caractérisée en ce que cet échangeur (100) comporte un dispositif (101) d'introduction de tablettes propres et un dispositif (102) de prélèvement de tablettes sales.

12. Installation selon la revendication 11, caractérisée en ce que le dispositif (101) d'introduction de tablettes propres et le dispositif de prélèvement de tablettes sales sont groupés en aval de la station d'évacuation des produits.

13. Installation selon la revendication 11, caractérisée en ce que le dispositif (101) d'introduction de tablettes propres est installé en aval d'une station séparée de dépôt des produits, et en ce que le dispositif de prélèvement des tablettes sales est installé en aval de la station d'évacuation des produits.

14. Installation selon la revendication 11, caractérisée en ce que le dispositif (101) d'introduction de tablettes propres comporte un poussoir (104) agencé pour pousser une tablette disposée au-dessus d'une pile de tablettes propres d'un magasin (103), dans un espace vide d'une gondole (14).

15. Installation selon la revendication 11, caractérisée en ce que le dispositif de prélèvement des tablettes comporte une griffe (108) agencée pour tirer une tablette sale hors d'une gondole (14) et pour l'amener au sommet d'une pile de tablettes sales d'un magasin (107).

16. Installation selon les revendications 14 et 15, caractérisée en ce que lesdits magasins (103 et 107) comportent une courroie crantée (101b, 102b) entraînée par un moteur d'entraînement (101a, 102a) et une console (101c, 102c) portant respectivement les piles de tablettes propres et sales.

17. Installation selon la revendication 10, caractérisée en ce que ledit échangeur automatique de tablettes comporte un dispositif d'amenée (8) de tablettes vides à charger localisé dans la station de dépôt (18) et un dispositif de reprise des tablettes vides déchargées.

18. Installation selon la revendication 17 caractérisée en ce que le dispositif d'amenée (8) des tablettes vides à charger est associé à un dispositif de chargement (9) de lits de produits, et en ce que le dispositif de reprise des tablettes vides déchargées est associé à un dispositif de déchargement de lits de produits identique au dispositif de chargement (9).

## Claims

1. Pendulant product storage device (10), in particular for food products and more particularly for bars of chocolate or the like, these products being placed on shelves (15) arranged horizontally on pendulant product carriers (14) horizontally suspended on two chains (12, 13) moving parallel to each other in a closed circuit comprising a feed section (17) going from a station (18) for loading products on the shelves, to a product receiving station (19), arranged for unloading the shelves, and a return section (20) in which the empty shelves are brought back from the receiving station to the loading station, in which the frame (11) consists of at least one basic module (30) comprising four vertical columns (31a, 31b, 31c, 31d) which are connected to each other in pairs by lower longitudinal coupling members (34) and upper longitudinal coupling members (35) and by lower transversal coupling members (36) and upper transversal coupling members (37), the vertical columns comprising at each of their ends four lower connecting members (32a, 32b, 32c, 32d) and upper connecting members (33a, 33b, 33c, 33d), said connecting members being provided with coupling means arranged for assuring the assembly of adjacent and/or superposed modules.

2. Installation according to claim 1, characterised in that the lower connecting members (32a, 32b, 32c, 32d) are arranged for carrying a lower sprocket wheel (A) and the upper connecting members (33a, 33b, 33c, 33d) are arranged for carrying an upper sprocket wheel (B) for guiding the chains.

3. Installation according to claim 1, characterised in that the lower longitudinal coupling members (34) are arranged for carrying at least one complementary sprocket wheel (A) and the upper longitudinal coupling members (35) are arranged for carrying at least one complementary sprocket wheel (B) for guiding the chains.

4. Installation according to claim 2, characterised in that the distance between two neighbouring lower sprocket wheels (A) and the distance between two neighbouring upper sprocket wheels (B) has a constant value d.

5. Installation according to claim 3, characterised in that the lower longitudinal coupling members (34) and the upper longitudinal coupling members (35) have a length substantially equal to a multiple of the distance d which separates two neighbouring sprocket wheels (respectively A or B).

6. Installation according to one of the preceding claims, characterised in that it comprises several juxtaposed and/or superposed modules, these modules being connected in pairs by common connecting members, and in that the longitudinal coupling members (34, 35) have lengths between d and nd, where n is an integer greater than 1.

7. Installation according to claim 1, characterised in that the connecting members (32a, 32b, 32c, 32d; 33a, 33b, 33c, 33d) are constituted by studs fixed to the ends of the vertical columns (31a, 31b, 31c, 31d), these studs having a parallelepipedic shape of square or rectangular cross-section and having four flat faces arranged for fixing the lower longitudinal coupling members (34) and upper longitudinal coupling members (35) and the lower transversal coupling members (36) and upper transversal coupling members (37).

8. Installation according to claim 7, characterised in that the longitudinal coupling members comprise a crossbeam (34a, 35a) supporting the sprocket wheels (A, B) and two stiffening rods (38, 39) arranged respectively on either side of said crossbeam.

9. Installation according to claim 7, characterised in that the connecting members (32a, 32b, 32c, 32d; 33a, 33b, 33c, 33d) are arranged for each carrying a sprocket wheel (A, B).

10. Installation according to claim 1, characterised in that it comprises at least one automatic shelf exchanger (100).

11. Installation according to claim 10, characterised in that this exchanger (100) comprises a clean shelf introduction device (101) and a dirty shelf removal device (102).

12. Installation according to claim 11, characterised in that the clean shelf introduction device (101) and the dirty shelf removal device are grouped downstream from the product clearing station.

13. Installation according to claim 11, characterised in that the clean shelf introduction device (101) is installed downstream from a separate product loading station, and in that the dirty shelf removal device is installed downstream from the product clearing station.

14. Installation according to claim 11, characterised in that the clean shelf introduction device (101) comprises a pusher (104) arranged for pushing a shelf arranged at the top of a stack of clean shelves in a magazine (103), into an empty space of a pendulant product carrier (14).

15. Installation according to claim 11, characterised in that the shelf removal device comprises a claw (108) arranged for withdrawing a dirty shelf from a pendulant product carrier (14) and for bringing it to the top of a stack of dirty shelves in a magazine (107).

16. Installation according to claims 14 and 15, characterised in that said magazines (103 and 107) comprise a notched belt (101b, 102b) driven by a driving motor (101a, 102a) and a console (101c, 102c) carrying the stacks of clean shelves and dirty shelves respectively.

17. Installation according to claim 10, characterised in that said automatic shelf exchanger comprises a device (8) for feeding empty shelves to be loaded located in the loading station (18) and a device for recovering unloaded empty shelves.

18. Installation according to claim 17, characterised in that the device (8) for feeding empty shelves to be loaded is associated with a device (9) for loading layers of products, and in that the unloaded empty shelf recovery device is associated with a device for unloading layers of products identical to the loading device (9).

## Patentansprüche

1. Vorrichtung zur pendelnden Speicherung (10) von Gegenständen, besonders von Lebensmitteln und vor allem von Schokoladetafeln oder etwas ähnlichem, wobei diese Produkte auf Tabletts (15) abgelegt sind, die horizontal an Gondeln (14) angeordnet sind, welche horizontal an zwei zueinander parallelen, sich langsam auf einer geschlossenen Bahn fortbewegenden Ketten (12,13) aufgehängt sind, wobei diese Einrichtung einen Zuführungsabschnitt (17) aufweist, mit einer Station (18) zum Auflegen der Produkte auf die Tabletts, anschließend eine Abnahmestation (19) für diese Produkte, die dazu dient, die Tabletts zu entleeren, und einen Abschnitt (20) für die Rückführung, in welchem die Tabletts leer von der Abnahmestation zur Station zum Auflegen zurückgeführt werden, bei der das Gestell (11) aus mindestens einer Grundeinheit (30) besteht, die aus vier vertikalen Säulen (31a,31b,31c,31d) besteht, und die untereinander paarweise durch untere (34) bzw. obere (35) Längsverbindungselemente verbunden sind, und durch untere (36) bzw. obere (37) Querverbindungselemente, wobei die vertikalen Säulen an jedem ihrer Enden jeweils vier untere (32a,32b,32c,32d) und obere (33a,33b,33c,33d) Verbindungselemente aufweisen, wobei diese Verbindungselemente mit Kupplungseinrichcungen versehen sind, die dazu dienen, die Montage von benachbarten und/oder übereinanderstehenden Einheiten zu gewährleisten.

2. Vorrichtung nach Anspruch 1,
**dadurch gekennzeichnet,** daß
die unteren Verbindungselemente (32a,32b,32c,32d) so ausgeführt sind, daß sie ein unteres gezahntes Rad (A) tragen können, und daß die oberen Verbindungselemente (33a,33b,33c,33d) so ausgeführt sind, daß sie ein oberes gezahntes Rad (B) für die Kettenführung tragen können.

3. Vorrichtung nach Anspruch 1,
**dadurch gekennzeichnet,** daß
die unteren Längsverbindungselemente (34) so ausgeführt sind, daß sie mindestens ein zusätzliches gezahntes Rad (A) tragen können, und daß die oberen Längsverbindungselemente (35) so ausgeführt sind, daß sie mindestens ein zusätzliches gezahntes Rad (B) für die Kettenführung tragen können.

4. Vorrichtung nach Anspruch 2,
**dadurch gekennzeichnet,** daß
der Abstand zwischen zwei benachbarten, gezahnten, unteren Rädern (A) und der Abstand zwischen zwei benachbarten, oberen, gezahnten Rädern (B) einen konstanten Wert d hat.

5. Vorrichtung nach Anspruch 3,
**dadurch gekennzeichnet,** daß
die unteren (34) und die oberen (35) Längsverbindungselemente eine Länge haben, die etwa gleich einem Vielfachen des Abstandes d ist, der zwei benachbarte gezahnte Räder (A bzw. B) trennt.

6. Vorrichtung nach einem der vorhergehenden Ansprüche,
**dadurch gekennzeichnet,** daß
sie mehrere nebeneinander und/oder übereinander befindliche Einheiten aufweist, wobei diese Einheiten paarweise durch gemeinsame Verbindungselemente gekuppelt sind, und daß die Längskupplungselemente (34,35) Längen von d und nd haben, wo n eine ganze Zahl größer als 1 ist.

7. Vorrichtung nach Anspruch 1,
**dadurch gekennzeichnet,** daß
die Verbindungselemente (32a,32b,32c,32d; 33a,33b, 33c,33d) aus Klötzen bestehen, die an den Enden der vertikalen Säulen (31a,31b,31c,31d) befestigt sind, wobei diese Klötze die Form eines Parallelepipeds mit quadratischem oder rechteckigem Querschnitt haben und vier ebene Flächen aufweisen, die so ausgeführt sind, daß man die unteren (34) und oberen (35) Längsverbindungselemente befestigen kann, sowie auch die unteren (36) und oberen (37) Querverbindungselemente.

8. Vorrichtung nach Anspruch 7,
**dadurch gekennzeichnet,** daß
die Längsverbindungselemente eine Traverse (34a, 35a) aufweisen, welche die gezahnten Räder (A,B) trägt, und zwei Versteifungsstäbe (38,39), die jeweils beiderseits der Traverse angeordnet sind.

9. Vorrichtung nach Anspruch 7,
**dadurch gekennzeichnet,** daß
die Verbindungselemente (32a,32b,32c,32d; 33a,33b, 33c,33d) so ausgeführt sind, daß jedes ein gezahntes Rad (A,B) tragen kann.

10. Vorrichtung nach Anspruch 1,
**dadurch gekennzeichnet,** daß
sie mindestens einen automatischen Tablettwechsler (100) aufweist.

11. Vorrichtung nach Anspruch 10,
**dadurch gekennzeichnet,** daß
dieser Wechsler (100) eine Vorrichtung (101) zum Zuführen von gereinigten Tabletts und eine Vorrichtung (102) für die Entnahme der ungereinigten Tabletts aufweist.

12. Vorrichtung nach Anspruch 11,
**dadurch gekennzeichnet,** daß
die Vorrichtung (101) zum Zuführen von gereinigten Tabletts und die Vorrichtung zum Entnehmen von ungereinigten Tabletts nach der Station für den Austrag der Produkte angeordnet ist.

13. Vorrichtung nach Anspruch 11,
**dadurch gekennzeichnet,** daß
die Vorrichtung (101) für die Zuführung der gereinigten Tabletts nach einer separaten Station für die Lagerung der Produkte installiert ist, und daß die Vorrichtung für die Entnahme von ungereinigten Tabletts hinter der Station für den Austrag der Produkte installiert ist.

14. Vorrichtung nach Anspruch 11,
**dadurch gekennzeichnet,** daß
die Vorrichtung (101) für die Zuführung von gereinigten Tabletts einen Schieber (104) aufweist, der dazu dient, ein auf einem Stapel von gereinigten Tabletts in einem Magazin (103) liegendes Tablett in einen freien Raum einer Gondel (14) zu schieben.

15. Vorrichtung nach Anspruch 11,
**dadurch gekennzeichnet,** daß
die Vorrichtung zum Entnehmen von Tabletts einen Haken (108) aufweist, der dazu dient, ein ungereinigtes Tablett aus einer Gondel (14) zu ziehen und es auf einen Stapel von ungereinigten Tabletts in einem Magazin (107) zu bringen.

16. Vorrichtung nach den Ansprüchen 14 und 15,
**dadurch gekennzeichnet,** daß
die Magazine (103 und 107) einen Zahnriemen (101b, 102b) aufweisen, der von einem Antriebsmotor (101a,102a) bewegt wird, und eine Konsole (101c, 102c), welche die Stapel der gereinigten und der ungereinigten Tabletts trägt.

17. Vorrichtung nach Anspruch 10,
**dadurch gekennzeichnet,** daß
der automatische Tablettwechsler eine Zuführvorrichtung (8) für leere zu beschickende Tabletts, die in der Lagerungsstation (18) angeordnet ist, und eine Vorrichtung zum Rückführen der leeren Tabletts aufweist.

18. Vorrichtung nach Anspruch 17,
**dadurch gekennzeichnet,** daß
die Zuführvorrichtung (8) für die leeren zu beschickenden Tabletts mit einer Beschickungsvorrichtung (9) für ganze Lagen von Produkten verbunden ist, und daß die Vorrichtung zur Rücknahme von entleerten Tabletts mit einer Vorrichtung zum lageweisen Entnehmen von Produkten, identisch mit der Beschickungsvorrichtung (9), verbunden ist.
